# EUROPÄISCHE PATENTSCHRIFT

(11) **EP 2 234 784 B1**
(45) Veröffentlichungstag und Bekanntmachung des Hinweises auf die Patenterteilung: **19.08.2015**
(21) Anmeldenummer: 08863818.4
(22) Anmeldetag: 11.12.2008
(51) Int. Cl.: B29C 44/58, B29C 44/10

(54) **FORMWERKZEUG UND VERFAHREN ZUM SCHÄUMEN EINES KÄLTEGERÄTS**
MOLD AND METHOD FOR FOAMING A COOLING DEVICE
OUTIL DE MOULAGE ET PROCÉDÉ DE MOUSSAGE D'UN APPAREIL FRIGORIFIQUE

(30) Priorität: 21.12.2007 DE 102007062007
(43) Veröffentlichungstag der Anmeldung: 06.10.2010
(73) Patentinhaber: BSH Hausgeräte GmbH, 81739 München (DE)
(72) Erfinder: FISCHER, Michael, 13587 Berlin (DE); KORDON, Frank, 89429 Bachhagel (DE); RESCHKE, Michael, 89520 Heidenheim (DE); SCHWENK, Reiner, 89437 Haunsheim (DE); SCHWEYER, Martin, 89443 Schwenningen (DE)
(86) Internationale Anmeldenummer: PCT/EP2008/067284
(87) Internationale Veröffentlichungsnummer: WO 2009/080537

(56) Entgegenhaltungen:
- WO-A-2004/043667
- JP-A- 54 127 474
- US-A- 4 824 617
- US-A- 5 009 952

## Beschreibung

Die Erfindung betrifft ein Formwerkzeug und ein Verfahren zum Schäumen eines Kältegeräts nach dem Oberbegriff von Anspruch 1 bzw. dem Oberbegriff von Anspruch 6.

Bei Kältegeräten, wie beispielsweise Kühlschränken oder Gefrierschränken wird versucht, den Energieverbrauch immer weiter zu reduzieren. Zu diesem Zweck werden neue Isoliermaterialien entwickelt, deren Wärmeleitfähigkeit gegenüber der Wärmeleitfähigkeit von gebräuchlichen Isoliermaterialien abgesenkt wurde. Der Einsatz dieser neuen Isoliermaterialien ist jedoch aufwändig und teuer, da sie sich nicht mit den bekannten und gebräuchlichen Vorrichtungen und Verfahren verarbeiten lassen.

Eine weitere Möglichkeit, die in Betracht gezogen Wurde, ist es die Schichtstärke der Isolierung zu vergrößern. Bei dieser Maßnahme verkleinert sich jedoch - bei unveränderten Außenmaßen des Kältegeräts - das für die Lagerung von Kühlgut zur Verfügung stehende Volumen des Innenraums.

Es wurde daher auch versucht, die Isolationsschicht nur an solchen Stellen zu verstärken, an denen noch Raum zur Verfügung steht, ohne dass dabei das Volumen des Innenraums reduziert werden müsste. Hierzu sind Kältegeräte bekannt geworden, deren Rückwand eine Ausbuchtung aufweist. Durch diese Ausbuchtung wird die Stärke der Isolierschicht in diesem Bereich erhöht. Der Wärmeeintrag durch die Rückwand in den Innenraum des Kältegeräts lässt sich dadurch verringern.

Der isolierte Innenraum eines Kältegeräts wird üblicherweise durch eine Innenschale begrenzt, die aus Kunststoff besteht und nur eine offene Seite aufweist. Diese Innenschale wird auf einen Sockel montiert. In dem folgenden Herstellungsschritt wird der Kältemittelkreislauf mit all seinen Komponenten installiert und die elektrischen Bauteile werden angebracht und miteinander verbunden. Das Außengehäuse wird mit einem Abstand zu der Innenschale montiert. Die Rückwand des Außengehäuses wird durch eine sogenannte Poliondafolie (eine Stegfolie aus Polypropylen) gebildet. Diese Folie weist eine hohe Steifigkeit auf. Trotzdem ist ihre Elastizität so hoch und ihr Fließverhalten so groß, dass sie sich bei entsprechendem Druck gut verformen lässt, ohne dabei zu reißen, oder Falten zu bilden.

Zur Fertigstellung des Kältegeräts wird in den Raum zwischen der Innenschale und dem Außengehäuse unter hohem Druck ein Isolierschaum eingespritzt. Die Einspritzöffnung befindet sich üblicherweise in dem so genannten Maschinenraum, in dem der Verdichter des Kältemittelkreislaufs untergebracht wird. Zur Stützung der Rückwand während des Schäumvorgangs wird üblicherweise ein Formwerkzeug verwendet. Um die Rückwand zu verstärken und die Ausbuchtung in der Rückwand zu erzeugen, ist in dem Formwerkzeug eine entsprechende Ausnehmung vorgesehen Während des Schäumvorgangs erhöht sich der Druck in dem Raum zwischen der Innenschale und dem Außengehäuse so stark, dass die Rückwand verformt und in die Ausnehmung des Formwerkzeugs hinein gedrückt wird.

Es hat sich jedoch herausgestellt, dass die für die Rückwand verwendete Poliondafolie keine große Dampf und Gasdiffusionsdichtheit aufweist. Das in den Schaumporen enthaltene Kohlendioxid diffundiert auf diese Weise durch die Rückwand in die Umgebung und wird durch eindiffundierende Luft ersetzt. Da jedoch Luft eine wesentlich bessere Wärmeleitfähigkeit als Kohlendioxid aufweist, verschlechtert sich damit die Isolationswirkung des Schaums erheblich. Bei der Verwendung einer Poliondafolie als Rückwand konnte festgestellt werden, dass bereits nach zwei Monaten 50 % des in dem Schaum vorhandenen Kohlendioxids durch Luft ersetzt worden war. Auf diese Weise wird der Vorteil, der durch die Verstärkung der Isolationsschicht unter der Rückwand durch die Ausbuchtung erreicht wird, sehr schnell wieder zunichte gemacht.

Die US 4,824,617offenbart ein Verfahren zur Herstellung eines Schaumkunststoffs, bei dem eine Kunststoffkomponente mit chemischen Schaummitteln in einen durch ein Paar von oberen und unteren Formhohlräumen gebildeten Formhohlraum eingebracht wird. Die Kunststoffkomponente wird einer dielektrischen Beheizung unterzogen, sodass sich das chemische Schaummittel zersetzt. Eine der Hohlraumoberflächen ist beweglich, um das Volumen des Formhohlraums in Übereinstimmung mit der Ausdehnung der Kunststoffkomponente zu variieren, sodass die bewegliche Hohlraumoberfläche mit der sich während des Beheizens ausdehnenden Kunststoffkomponente in Kontakt bleibt.

Die JP 54127474 A offenbart ein Verfahren zum Herstellen einer wärmeisolierenden Wandung.

Der Erfindung liegt die Aufgabe zugrunde, ein Formwerkzeug und ein Verfahren zum Schäumen von Kältegeräten so auszugestalten, dass sich eine Ausbuchtung auch in der Rückwand eines Kältegeräts erzeugen lässt, deren Material eine hohe Gasdiffusionsdichtheit aufweist. Bei dem Erzeugen der Ausbuchtung sollen in der Rückwand keine Falten gebildet werden, die zum Austreten von Schaum während des Schäumvorgangs führen.

Gelöst wird die Aufgabe gemäß der Erfindung durch ein Formwerkzeug mit den Merkmalen von Anspruch 1 und ein Verfahren mit den Merkmalen von Anspruch 6. Die Stützplatte des Formwerkzeugs weist eine Ausnehmung auf, die entsprechend der angestrebten Ausbuchtung der Rückwand geformt ist. In dieser Ausnehmung ist eine Federplatte angeordnet, die durch eine Stützkraft in ihrer Ausgangsstellung gehalten wird, in der die Federplatte bündig mit der Stützplatte abschließt. Die Stützkraft wird während des Schäumvorgangs überwunden und die Federplatte wird in die Ausnehmung eingedrückt. Durch das erfindungsgemäße Formwerkzeug und das erfindungsgemäße Verfahren wird es nun möglich auch Rückwandmaterialien zu verarbeiten, die ein schlechteres Fließverhalten und eine geringere Elastizität als die bekannte Poliondafolie aufweisen. Derartige Materialien lassen sich aber so aufbauen, dass eine hohe Gasdichtheit gewährleistet ist.

In einem Ausführungsbeispiel der Erfindung ist die Federplatte gegen Federkraft eindrückbar. Die Stützkraft wird über die verwendeten Federn dabei so eingestellt, dass der Schäumvorgang in zwei Abschnitte aufgeteilt wird. In einem ersten Abschnitt verharrt die Federplatte nach Beginn des Schäumvorgangs in ihrer Ausgangsstellung. Dieser erste Abschnitt wird zeitlich so dimensioniert, dass die Rückwand in ihren Eck- und Randbereichen, in denen sie mit der Stützplatte in Kontakt steht, durch den Schaum fixiert und abgedichtet wird. Erst wenn in diesem Bereich die Abdichtung erfolgt ist, wird die Stützkraft der Federn überwunden. In diesem zweiten Abschnitt des Schäumvorgangs wird die Federplatte durch ein Verformen der Rückwand in die Ausnehmung eingedrückt. Durch das Rückweichen der Federplatte kann die Rückwand dem Schaumdruck nachgeben und die gewünschte Ausbuchtung bilden.

Da während dieses zweiten Abschnitts die Rückwand in ihren Eck- und Randbereichen bereits fixiert und abgedichtet ist, kommt es in diesen Eck- und Randbereichen nur zu einer geringen Faltenbildung. Diese Falten verlaufen jedoch nicht bis zum Rand, so dass kein Schaum austreten kann.

Die Bewegung der Federplatte und damit der Beginn des zweiten Abschnitts des Schäumvorgangs wird in diesem Ausführungsbeispiel durch die Stützkraft der Federn und den Schaumdruck geregelt. Die Federn müssen dabei so ausgewählt werden, dass die Federplatte dem Schaumdruck so lange standhalten kann, bis die Fixierung und Abdichtung der Rückwand in den Rand- und Eckbereichen erfolgt ist. Erst dann sollen die Federn dem Schaumdruck nachgeben und das Eindrücken der Federplatte in die Ausnehmung zulassen.

In einem anderen Ausführungsbeispiel ist die Federplatte über Pneumatik- oder Hydraulikzylinder gegen das Formwerkzeug abgestützt. In diesem Fall kann die Bewegung der Federplatte zeitlich gesteuert werden. Das bedeutet, dass nach einer vorbestimmten Zeit nach Beginn des Schäumvorgangs, wenn sicher gestellt ist, dass die Abdichtung in den Eck- und Randbereichen der Rückwand bereits erfolgt ist, die Stützkraft verringert wird. Erst nach dieser bewussten Einleitung des zweiten Abschnitts des Schäumvorgangs kann sich die Rückwand verformen und in die Ausnehmung eingedrückt werden.

Vorteilhaft weist die Ausnehmung schräge Seitenwände und einen ebenen Boden auf. Diese Formgebung der Ausnehmung gewährleistet, dass in einem großen Bereich der Rückwand die Isolationsschicht die gleiche Stärke aufweist. In den Randbereichen der Ausbuchtung ergibt sich jedoch ein sanfter Übergang, so dass keine allzu großen Anforderungen an Fließverhalten und Elastizität des Rückwandmaterials gestellt werden müssen. Um die Übergänge zwischen den Seitenwänden und dem Boden der Ausnehmung sowie den Seitenwänden und dem Randbereich der Rückwand weiter zu verbessern, können die entsprechenden Kanten noch gerundet werden.

Das Formwerkzeug kann sehr einfach aufgebaut werden, wenn die Federplatte die gleiche Größe wie der Boden der Ausnehmung aufweist oder zumindest nicht größer als der Boden der Ausnehmung ist. Auf diese Weise lässt sich die Federplatte ganz auf den Boden zurück drücken. In ihrer Ausgangsstellung, in der sie bündig mit des Stützplatte abschließt, verbleibt in diesem Fall zwischen Stützplatte und Federplatte ein offener Bereich, der den Seitenwänden der Ausnehmung entspricht. In diesem Bereich wird die Rückwand während des ersten Abschnitts des Schäumvorgangs nicht gestützt. Dies wirkt sich jedoch nicht negativ aus, da die Unterstützung der Rückwand durch die Federplatte und die Stützplatte vollkommen ausreichend ist. Eine Verformung der Rückwand in dem Bereich zwischen Stützplatte und Federplatte während des ersten Abschnitts des Schäumvorgangs kann aufgrund des schlechten Fließverhaltens und der geringen Elastizität des Rückwandmaterials ausgeschlossen werden.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

Es zeigt:
- Fig. 1: einen Schnitt durch das erfindungsgemäße Formwerkzeug entlang der Linie AA in Fig. 2,
- Fig. 2: eine Aufsicht auf das Formwerkzeug und
- Fig. 3: den Aufbau des Rückwandmaterials.

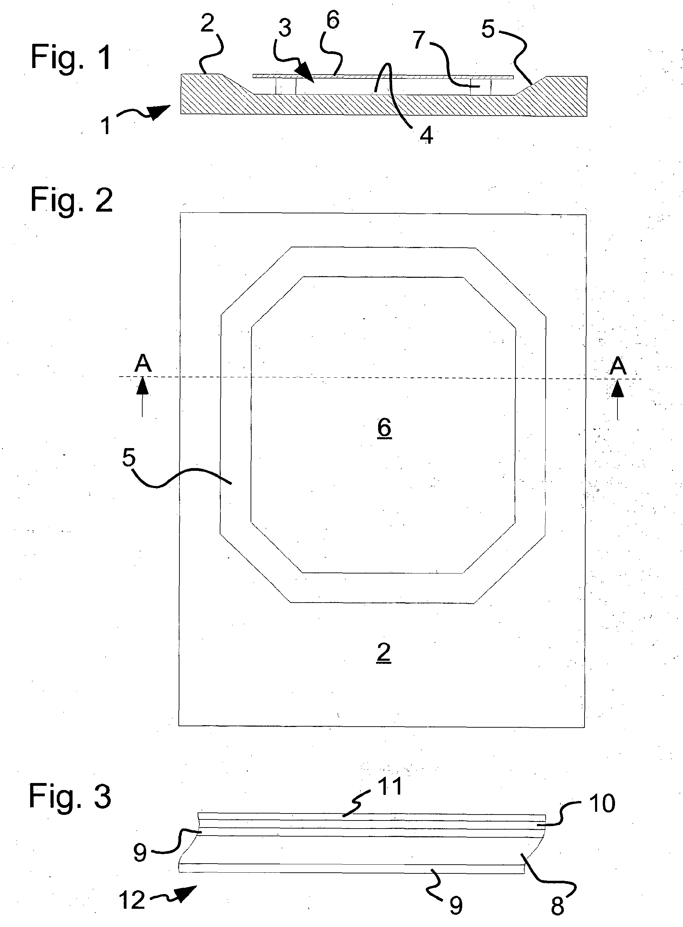

Das in den Figuren 1 und 2 dargestellte Formwerkzeug 1 weist eine Stützplatte 2 auf. Mit dieser Stützplatte 2 werden die Rand- und Eckbereiche der Rückwand 12 (siehe Fig. 3) des Kältegeräts während des Schäumvorgangs abgestützt.

In der Stützplatte 2 ist eine Ausnehmung 3 vorgesehen. Diese Ausnehmung 3 weist eine Tiefe von etwas mehr als 15 mm auf. Die Ausnehmung 3 besitzt einen ebenen Boden 4 und schräge Seitenwände 5. Der Übergang zwischen Boden 4 und Seitenwänden 5 sowie zwischen Seitenwänden 5 und Stützplatte 2 könnte - anders als in dem hier gezeigten Ausführungsbeispiel - auch rund ausgebildet sein.

In der Ausnehmung 3 sind vier Federbuchsen 7 vorgesehen. Auf diesen Federbuchsen 7 lagert die Federplatte 6. Die Federplatte 6 ist über eine vorbestimmte Kraft auf den Boden 4 der Ausnehmung 3 niederdrückbar. Die Seitenränder der Federplatte 6 können schräg ausgeführt sein, so dass sie sich in niedergedrücktem Zustand der Federplatte 6 an die Seitenwände 5 der Ausnehmung 3 anlegen. Es kann aber auch in dem Boden 4 der Ausnehmung 3 eine weitere Ausnehmung mit senkrechten Seitenwänden vorgesehen sein, die die Federplatte 6 in niedergedrücktem Zustand vollkommen aufnimmt. Diese beide Varianten sind aus Übersichtlichkeitsgründen in der Zeichnung nicht dargestellt.

Statt der Federbuchsen 7 können auch beispielsweise Hydraulikzylinder vorgesehen sein. Während des ersten Abschnitts des Schäumvorgangs würde bei dieser Ausführungsform eine Leitung für die Zu- und Abfuhr von Hydraulikflüssigkeit zu den Hydraulikzylindern über ein Ventil abgesperrt werden. Erst zur Einleitung des zweiten Abschnitts des Schäumvorgangs wird dieses Ventil geöffnet. Die Hydraulikflüssigkeit kann nun aus den Hydraulikzylindern herausgedrückt und die Federplatte 6 bis auf den Boden 4 der Ausnehmung 3 abgesenkt werden.

Bei der Verwendung von Federbuchsen muss die Federkraft so gewählt werden, dass die Federplatte 6 während des ersten Abschnitts des Schäumvorgangs dem Schaumdruck standhält. Während dieses Abschnitts des Schäumvorgangs wird die gesamte Rückwand des Kältegeräts durch das Formwerkzeug 1 abgestützt. Dieser erste Abschnitt ist zeitlich so dimensioniert, dass die Rand- und Eckbereiche der Rückwand durch den Schaum fixiert und abgedichtet werden.

Erst mit der Erhöhung des Schaumdrucks wird der zweite Abschnitt des Schäumvorgangs eingeleitet. Die Federbuchsen 7 geben nun dem erhöhten Druck nach und die Federplatte 6 senkt sich auf den Boden 4 der Ausnehmung 3 ab. Dabei passt sich die Rückwand 12 der Form der Ausnehmung 3 an und bildet eine Ausbuchtung, deren Höhe ca. 15 mm beträgt. Da die Eck- und Randbereiche der Rückwand 12 bereits fixiert und abgedichtet sind, kann es hier zu keiner Faltenbildung mehr kommen. Damit wird ein Austritt des Schaums durch Falten, die sich bis zu den Rändern und Ecken der Rückwand erstrecken, sicher verhindert.

Fig. 3 zeigt den Aufbau einer Rückwand 12, die so aufgebaut ist, dass sie eine hohe Gasdichtheit aufweist. Elastizität und Fließverhalten dieses Rückwandaufbaus sind geringer als bei einer Rückwand, die aus der bekannten Poliondafolie hergestellt ist. Trotzdem kann dieses Rückwandmaterial mit dem erfindungsgemäßen Formwerkzeug 1 nach dem erfindungsgemäßen Verfahren hervorragend verarbeitet werden.

Der Kern der Rückwand 12 besteht aus einem Duplexkarton 8. Der Duplexkarton 8 ist hauptsächlich für die Steifheit der Rückwand 12 verantwortlich. Diese Steifheit wird benötigt, um die Formstabilität der Rückwand gewährleisten zu können. Der Duplexkarton 8 ist auf beiden Seiten mit einer PE-Folie 9 beschichtet. Diese PE-Folie 9 bildet auf der einen Seite des Duplexkartons 8 gleichzeitig die Außenseite der Rückwand 12. Auf der anderen Seite des Duplexkartons 8 ist die PE-Folie 9 mit einer AI-Folie 10 beschichtet. Diese AI-Folie 10 wird mit einem NC-Lack 11 versehen, um eine gute Schaumhaftung der Rückwand 12 gewährleisten zu können.

### Bezugszeichenliste:

- 1: Formwerkzeug
- 2: Stützplatte
- 3: Ausnehmung
- 4: Boden
- 5: schräge Seitenwände
- 6: Federplatte
- 7: Federbuchsen
- 8: Duplexkarton
- 9: PE-Folie
- 10: Al-Folie
- 11: NC-Lack
- 12: Rückwand

## Patentansprüche

1. Formwerkzeug zum Schäumen eines Kältegeräts, welches während des Schäumvorgangs die Rückwand (12) stützt, mit einer der Rückwand (12) entsprechenden Stützplatte (2), wobei die Stützplatte (2) eine Ausnehmung (3) aufweist, in der eine Federplattel (6) angeordnet ist, die durch eine Stützkraft in ihre Ausgangsstellung gedrückt wird **dadurch gekennzeichnet, dass** in der Ausgangsstellung die Federplatte bündig mit der Stützplatte (2) abschließt.

2. Formwerkzeug nach Anspruch 1, **dadurch gekennzeichnet, dass** die Federplatte (6) gegen Federkraft eindrückbar ist.

3. Formwerkzeug nach Anspruch 1, **dadurch gekennzeichnet, dass** die Federplatte (6) über Pneumatik- oder Hydraulikzylinder gegen das Formwerkzeug (1) abgestützt ist.

4. Formwerkzeug nach Anspruch 1, **dadurch gekennzeichnet, dass** die Ausnehmung (3) schräge Seitenwände (5) und einen ebenen Böden (4) aufweiset.

5. Formwerkzeug nach Anspruch 4, **dadurch gekennzeichnet, dass** die Federplatte (6) die gleiche Größe wie der Boden (4) der Ausnehmung aufweist.

6. Verfahren zum Schäumen eines Kältegeräts unter Verwendung eines Formwerkzeugs (1), welches eine Stützplatte (2) zum Stützen der Rückwand (12) des Kältegeräts während des Schäumvorgangs aufweist, **dadurch gekennzeichnet, dass** eine Federplatte (6), die in einer Ausnehmung (3) der Stützplatte (2) angeordnet ist, vor dem Schäumvorgang durch eine Stützkraft in ihre Ausgangsstellung gedrückt wird, in der die Federplatte (6) bündig mit der Stützplatte (2) abschließt und die Stützkraft während des Schäumvorgangs überwunden und die Federplatte (6) in die Ausnehmung (3) eingedrückt wird.

7. Verfahren nach Anspruch 6 **dadurch gekennzeichnet, dass** die Federplatte (6) während eines ersten Abschnitts des Schäumvorgangs in ihrer Ausgangsstellung verharrt und während eines zweiten Abschnitts des Schäumvorgangs durch eine Verformung der Rückwand (12) in die Ausnehmung (3) eingedrückt wird.

8. Verfahren nach Anspruch 7 **dadurch gekennzeichnet, dass** die Rückwand (12) während des ersten Abschnitts des Schäumvorgangs in ihren Eck- und Randbereichen, in denen sie mit der Stützplatte (2) in Kontakt steht, fixiert und abgedichtet wird.

9. Verfahren nach Anspruch 8 **dadurch gekennzeichnet, dass** die Bewegung der Federplatte (6) über ihre Stützkraft und den Schaumdruck geregelt wird.

10. Verfahren nach Anspruch 8 **dadurch gekennzeichnet, dass** die Bewegung des Federplatte (6) über eine Veränderung der Stützkraft zeitlich gesteuert wird.

## Claims

1. Mould for foaming a cooling device, which supports the rear wall (12) during the foaming process, having a support plate (2) corresponding to the rear wall (12), wherein the support plate (2) has a recess (2), in which a spring plate (6) is disposed, which is pressed by a supporting force into its initial position, **characterised in that** in the initial position the spring plate terminates flush with the support plate (2).

2. Mould according to claim 1, **characterised in that** the spring plate (6) can be pressed in counter to spring force.

3. Mould according to claim 1, **characterised in that** the spring plate (6) is braced against the mould (1) by way of pneumatic or hydraulic cylinders.

4. Mould according to claim 1, **characterised in that** the recess (3) has angled side walls (5) and a flat base (4).

5. Mould according to claim 4, **characterised in that** the spring plate (6) is the same size as the base (4) of the recess.

6. Method for foaming a cooling device using a mould (1) that has a support plate (2) to support the rear wall (12) of the cooling device during the foaming process, **characterised in that** a spring plate (6) that is disposed in a recess (3) in the support plate (2), is pressed before the foaming process by a supporting force into its initial position, in which the spring plate (6) terminates flush with the support plate (2) and the supporting force is overcome during the foaming process and the spring plate (6) is pressed into the recess (3).

7. Method according to claim 6, **characterised in that** the spring plate (6) remains in its initial position during a first segment of the foaming process and is pressed into the recess (3) during a second segment of the foaming process as the rear wall (12) changes shape.

8. Method according to claim 7, **characterised in that** during the first segment of the foaming process the rear wall (12) is fixed and sealed in its corner and edge regions, in which it is in contact with the support plate (2).

9. Method according to claim 8, **characterised in that** the movement of the spring plate (6) is regulated by way of its supporting force and the foam pressure.

10. Method according to claim 8, **characterised in that** the movement of the spring plate (6) is controlled timewise by a change in the supporting force.

## Revendications

1. Outil de moulage pour le moussage d'un appareil frigorifique, qui soutient la paroi arrière (12) pendant l'opération de moussage, avec une plaque d'appui (2) correspondant à la paroi arrière (12), dans lequel la plaque d'appui (2) présente un évidement (3), dans lequel est disposée une plaque à ressorts (6), qui est pressée dans sa position initiale par une force d'appui, **caractérisé en ce que** la plaque à ressorts se verrouille, dans la position initiale, en alignement avec la plaque d'appui (2).

2. Outil de moulage selon la revendication 1, **caractérisé en ce que** la plaque à ressorts (6) peut être enfoncée contre la force des ressorts.

3. Outil de moulage selon la revendication 1, **caractérisé en ce que** la plaque à ressorts (6) est supportée par des cylindres pneumatiques ou hydrauliques contre l'outil de moulage (1).

4. Outil de moulage selon la revendication 1, **caractérisé en ce que** l'évidement (3) présente des parois latérales inclinées (5) et un fond plan (4).

5. Outil de moulage selon la revendication 4, **caractérisé en ce que** la plaque à ressorts (6) présente la même grandeur que le fond (4) de l'évidement.

6. Procédé de moussage d'un appareil frigorifique avec utilisation d'un outil de moulage (1), qui présente une plaque d'appui (2) pour soutenir la paroi arrière (12) de l'appareil frigorifique pendant l'opération de moussage, **caractérisé en ce que** l'on presse une plaque à ressorts (6), qui est disposée dans un évidement (3) de la plaque d'appui (2), avant l'opération de moussage au moyen d'une force d'appui dans sa position initiale, dans laquelle la plaque à ressorts (6) se verrouille en alignement avec la plaque d'appui (2) et, pendant l'opération de moussage, on dépasse la force d'appui et on enfonce la plaque à ressorts (6) dans l'évidement (3).

7. Procédé selon la revendication 6, **caractérisé en ce que** l'on immobilise la plaque à ressorts (6) dans sa position initiale pendant une première partie de l'opération de moussage et on l'enfonce dans l'évidement (3) par une déformation de la paroi arrière (12) pendant une deuxième partie de l'opération de moussage.

8. Procédé selon la revendication 7, **caractérisé en ce que** l'on fixe et on colmate la paroi arrière (12), pendant la première partie de l'opération de moussage, dans ses régions de coin et de bord dans lesquelles elle est en contact avec la plaque d'appui (2).

9. Procédé selon la revendication 8, **caractérisé en ce que** l'on régule le mouvement de la plaque à ressorts (6) par sa force d'appui et la pression de la mousse.

10. Procédé selon la revendication 8, **caractérisé en ce que** l'on commande temporellement le mouvement de la plaque à ressorts (6) par une variation de la force d'appui.
